# EUROPÄISCHE PATENTSCHRIFT

(11) **EP 2 541 348 B1**
(45) Veröffentlichungstag und Bekanntmachung des Hinweises auf die Patenterteilung: **22.03.2017**
(21) Anmeldenummer: 11005250.3
(22) Anmeldetag: 28.06.2011
(51) Int. Cl.: G05B 19/042, G06F 9/45

(54) **Verfahren und Programmiersystem zur Programmierung einer Automatisierungskomponente**
Method and programming system for programming an automation component
Procédé et système de programmation pour la programmation d'un composant d'automatisation

(43) Veröffentlichungstag der Anmeldung: 02.01.2013
(73) Patentinhaber: Siemens Aktiengesellschaft, 80333 München (DE)
(72) Erfinder: Mössner, Rudolf, 93133 Burglengenfeld (DE)

(56) Entgegenhaltungen:
- US-B1- 6 766 419
- Peter Hutchison: "The complete Amiga 500 User Guide", , 2003, Seiten 1-40, XP002660455, Gefunden im Internet: URL:http://us2.aminet.net/docs/help/A500Us erGuide.pdf [gefunden am 2011-10-03]

## Beschreibung

Die Erfindung betrifft ein Verfahren zur Programmierung einer Automatisierungskomponente einer industriellen Automatisierungsanordnung gemäß dem Oberbegriff des Patentanspruchs 1, und ein Programmiersystem zur Durchführung des Verfahrens gemäß dem Patentanspruch 9.

Für die Automatisierung von Fertigungsanlagen und Prozessen werden speicherprogrammierbare Steuerungen eingesetzt, kurz SPS. Kern einer speicherprogrammierbaren Steuerung ist eine mikroprozessorbasierte Steuerungseinrichtung, die oft auch als CPU bezeichnet wird (CPU = Central Processing Unit). Bei der Realisierung dieser Zentralbaugruppen (CPU's) in den speicherprogrammierbaren Steuerungen werden heute überwiegend gebräuchliche, aus dem PC-Bereich oder dem Mikrocontroller-Bereich bekannte Prozessoren oder Prozessor-Designs (Prozessor Cores) eingesetzt. Dabei können sowohl einzelne Prozessoren eingesetzt werden, als auch Multiprozessor-Systeme oder Systeme mit mehreren Prozessor-Kernen. Bei leistungsfähigen Prozessorsystemen wird im Allgemeinen ein hierarchisch strukturiertes Speichersystem eingesetzt, wobei die "näher" an der Verarbeitungseinheit (Prozessoren) liegenden Ebenen, beispielsweise Cache-Speicher oder sog. Tightly Coupled Memory (TCM), in der Regel geringere Speicherkapazitäten, dafür aber deutlich höhere Zugriffsgeschwindigkeiten und geringere Latenzzeiten aufweisen, als der allgemeine Arbeitsspeicher (meist DRAM).

Die technische Weiterentwicklung von Standard-Prozessoren und Prozessor-Cores wird im Wesentlichen durch Zielmärkte wie die PC-Technik, der Bild-, Video-Verarbeitung und der Datenübertragung (Telephonie, Streaming) geprägt. Dies hat zur Folge, dass sowohl die Hardware-Architektur als auch die Strategien zur Nutzung der Cache-Speicher bzw. der TCM-Speicher im Stand der Technik auf einen möglichst großen Datendurchsatz pro Zeiteinheit optimiert sind. Mit anderen Worten soll die durchschnittliche Verarbeitungszeit für eine Datenmenge regelmäßig minimiert werden. Bei vielen der bekannten Applikationen, bei denen umfangreiche Datenmengen bearbeitet werden, werden hierfür Schleifen bzw. immer wiederkehrende Unterprogrammsequenzen benutzt. Ein Cache-Controller oder eine ähnliche Verarbeitungseinheit registriert dabei den häufig wiederholt durchlaufenen Programm-Code und häufig verwendete Verwaltungsdaten, wodurch diese Programm- und Datensegment bevorzugt im Cache-Speicher bzw. TCM-Speicher gehalten werden. Die Verwendung von Cache-Speicher führt dabei also lediglich zur Optimierung des durchschnittlichen Durchsatzes.

Im Gegensatz dazu wird bei vielen typischen Anwendungen in der Automatisierungstechnik, bei denen die speicherprogrammierbaren Steuerungen eingesetzt werden, oft weniger hohe Anforderungen an die durchschnittliche Bearbeitungszeit oder einen hohen Datendurchsatz gestellt, sondern vielmehr eine hohe Anforderung an die Reproduzierbarkeit der Laufzeit oder der Verzögerungszeit für bestimmte Teilapplikationen, wobei diese möglichst wenig schwanken sollten, also einen möglichst geringen "Jitter" aufweisen sollen. Beispiele hierfür sind Anwendungen zur Bewegungssteuerung, Hydraulikregelungen, Umrichter-Steuerungen in der Leistungselektronik und auch die Reaktion auf asynchrone Ereignisse in schnell laufenden Maschinen und Anwendungen. TCM-Speicher wird dabei im Regelfall gezielt für die reproduzierbare Ausführung von Code bzw. für den reproduzierbaren Zugriff auf Daten verwendet. Die Verwendung von TCM-Speicher erfordert jedoch eine exakte Kenntnis der HW-Architektur und das manuelle Erstellen spezieller Lokatierungsvorschriften für die Code- und Daten- Anteile.

Somit sind die bekannten Verfahren für die speicherprogrammierbaren Steuerungen und die damit realisierten Anwendungen entweder weniger geeignet (Cache-Speicher) oder erfordern für ihre Implementierung hohen Aufwand und tiefgehende Kenntnisse der jeweils verwendeten Hardware (TCM-Speicher).

Die Druckschrift US 6,766,419 B1 - Zahir et al. "Optimization of cache evictions through software hints" strebt eine bessere Ausnutzung von Cache-Speicher an, indem vorgeschlagen wird, in Anwendungsprogrammen spezielle Anweisungen ("software hints") zu hinterlegen, die solche Daten, z.B. Variablen, bezeichnen, die im weiteren Programmablauf wahrscheinlich nicht mehr verwendet werden. Diese Daten können dann aus dem Cache-Speicher entfernt werden.

Die Druckschrift von Peter Hutchinson "The complete Amiga 500 user guide" beschreibt die vom Betriebssystem des Computers "Commodore Amiga 500" vorgesehene Möglichkeit, häufig benutzte Befehle bzw. den zur Ausführung dieser Befehle verwendeten Programmcode von einer Diskette in einen Festplattenspeicher, z.B. eine sog. RAM-Disk, zu übertragen. Ein Benutzer kann in einer Betriebssystemdatei dazu diejenigen Systemkommandos eintragen, die fortan aus dem Arbeitsspeicher heraus aufgerufen werden sollen. Damit wird der entsprechende Befehl in der Folge deutlich schneller ausgeführt.

Die erreichbare Performance im Mikroprozessor-System ist sehr stark davon abhängig, ob sich der zu verarbeitende Code bzw. die zugehörigen Daten bereits im schnellen "Core-nahen" Arbeitsspeicher, beispielsweise Cache-Speicher oder TCM-Speicher, befinden, oder noch im vergleichsweise langsamen normalen Arbeitsspeicher (in der Regel DRAM). Da ein gesamtes Programm, insbesondere Automatisierungsprogramm, im Regelfall größer ist als der zur Verfügung stehende schnelle spezielle Arbeitsspeicher (Cache-Speicher, TCM-Speicher), und es vom bisherigen Programmablauf abhängt, welche Teile des Automatisierungsprogramms und welche Teile der Daten sich im speziellen Arbeitsspeicher befinden, und welche nicht, ist das zeitliche Verhalten der Applikation im Allgemeinen und speziell die Ausführungszeit und Reaktionszeit bestimmter Funktionen kaum vorherzusagen und überdies schwankend.

Verstärkt wird dieser negative Effekt dadurch, dass die "Jitter-kritischen" Aufgaben (Tasks) häufig einen stark linearen Charakter aufweisen und somit in der Regel keine häufig durchlaufenen, lokalen Schleifen aufweisen, die bevorzugt von Cache-Verwaltungseinrichtungen im speziellen, schnellen Arbeitsspeicher gehalten werden. Für SPS-Tasks mit hohen Anforderungen an die Reproduzierbarkeit (z.B. Regelung, Takt-Erzeugung oder Reaktion auf Prozess-Alarme) ist diese nicht vorhersehbare, schwankende Abarbeitungsgeschwindigkeit in Folge von "Cache-Hit" oder "Cache-Miss" und den in diesem Zusammenhang auftretenden "Jitter" problematisch. Da Verletzungen von zeitlichen Anforderungen regelmäßig zu Störungen in der Applikation und somit eines zu steuernden Prozesses oder Ablaufs führen, muss für die Dimensionierung die im "Worst-Case"-Fall auftretende Programmlaufzeit, also diejenige bei "Cache-Miss", zugrunde gelegt werden, was zu erheblichen Performance-Einbußen führt, auch wenn die durchschnittlichen Werte deutlich besser sein könnten. Die Ermittlung der Ausführungszeit für diesen "Worst Case" ist für den Anwender auch schwierig, da die Laufzeiten einer Aufgabe (Task) massiv durch die zeitlichen Abläufe in den anderen Tasks beeinflusst werden, was sowohl eine Unterbrechung einer wichtigen Aufgabe betrifft, als auch die "Vorgeschichte" der Belegung eines Cache-Speichers etc.

Es ist also eine Aufgabe der vorliegenden Erfindung, den Geschwindigkeitsvorteil von Cache-Speicher bzw. TCM-Speicher für zeitkritische Aufgaben optimal und zuverlässig auszunutzen.

Es ist dabei ein zentraler Aspekt der erfindungsgemäßen Lösung der Aufgabe, dass einem Benutzer eine Anwenderschnittstelle bereitgestellt wird, die eine komfortable Möglichkeit zur Erstellung von Teil-Aufgaben bzw. Teil-Programmen mit hohen Anforderungen an die Reproduzierbarkeit der Ausführungszeit und der Performance allgemein bietet, wobei der Benutzer von der konkreten Kenntnis der zugrundeliegenden Speicherstruktur entlastet ist, sodass Lokatierungsvorschriften einfach und Hardware-unabhängig erstellt werden können. Erfindungsgemäß sollen dadurch alle Programmteile, die bei der Ausführung einer zeitkritischen Aufgabe zur Ausführung kommen können, dauerhaft in einem speziellen, schnellen Arbeitsspeicher verbleiben.

Die Lösung der Aufgabe sieht insbesondere ein Verfahren gemäß dem Patentanspruch 1 und ein Programmiersystem gemäß dem Patentanspruch 9 vor.

Die Lösung der Aufgabe sieht insbesondere ein Verfahren zur Programmierung einer Automatisierungskomponente einer industriellen Automatisierungsanordnung vor, wobei die Automatisierungskomponente mit einem allgemeinen Arbeitsspeicher und mit zumindest einem speziellen Arbeitsspeicher mit im Vergleich zum allgemeinen Arbeitsspeicher schnellerem Zugriff ausgestattet ist, und wobei zur Laufzeit eines Automatisierungsprogramms ein Teil des Automatisierungsprogramms in dem speziellen Arbeitsspeicher gespeichert wird. Dabei wird bei der Erstellung des Automatisierungsprogramms einem Benutzer eine Eingabemöglichkeit zur Zuordnung von Prioritätswerten zu einzelnen Aufgaben des Automatisierungsprogramms zur Verfügung gestellt, wobei durch eine Einrichtung eine Identifizierung aller Programmteile, die bei der Abarbeitung zumindest der Aufgabe mit der höchsten von dem Benutzer zugeordneten Priorität aufgerufen werden oder aufgerufen werden können, erfolgt. Die identifizierten Programmteile werden dann für die Dauer der Ausführung des Automatisierungsprogramms dauerhaft in den zumindest einen speziellen Arbeitsspeicher gespeichert. Durch dieses Verfahren ist sichergestellt, dass wichtige Programmteile zum einen schnell ausgeführt werden können, indem Sie in dem schnelleren, speziellen Arbeitsspeicher gespeichert werden. Zum anderen ist die Ausführungsgeschwindigkeit dieser Programmteile konstant, denn diese Programmteile sind immer im speziellen Arbeitsspeicher abgespeichert, so dass ein "Cache-Miss" nicht auftreten kann. Ein weiterer Vorteil des Verfahrens liegt darin begründet, dass alle von der priorisierten Aufgabe abhängigen Programmteile ebenfalls in dem speziellen Arbeitsspeicher vorgehalten werden, so dass bei der Ausführung zeitkritischer Routinen eine Verzweigung in den konventionellen Arbeitsspeicher nicht notwendig ist.

Die Lösung der Aufgabe sieht außerdem ein Programmiersystem für die Erstellung eines Automatisierungsprogramms für eine Automatisierungskomponente vor, wobei das Programmiersystem zur Durchführung dieses erfindungsgemäßen Verfahrens ausgebildet ist. Das Programmiersystem umfasst dabei insbesondere eine Eingabemöglichkeit zur Zuordnung von Prioritätswerten oder zumindest eines Prioritätswertes zu einem Programmteil bzw. zu einer programmierten Funktion, die zur Laufzeit möglichst schnell und/oder mit reproduzierbarer Verzögerung bzw. Latenzzeit ausgeführt werden soll. Weiterhin umfasst das Programmiersystem eine Einrichtung, mit der alle von der gewählten Funktion abhängigen Funktionen bzw. Programmteile oder Programm-Routinen ermittelt bzw. identifiziert werden können. Das Programmiersystem, insbesondere mit dem Programmiersystem verbundene Compiler, Linker und "Loader", ist zudem derart ausgestaltet, dass die identifizierten Programmteile, Routinen etc. während der Laufzeit des Automatisierungsprogramms im speziellen Arbeitsspeicher gespeichert werden und dort dauerhaft zur Ausführung bereit stehen. Mit einem solchen Programmiersystem lassen sich dieselben Vorteile realisieren, die mit dem erfindungsgemäßen Verfahren verbunden sind.

Vorteilhafte Ausgestaltungen des erfindungsgemäßen Verfahrens sind in den abhängigen Patentansprüchen 2 bis 8 angegeben. Die dabei beschriebenen Merkmale und Vorteile gelten sinngemäß auch für das erfindungsgemäße Programmiersystem. Weiter sind vorteilhafte Ausgestaltungen des erfindungsgemäßen Programmiersystems in den abhängigen Patentansprüchen 10 bis 16 angegeben, wobei deren Merkmale und Vorteile sinngemäß auch für das erfindungsgemäße Verfahren gelten. Die erfindungsgemäßen Merkmale der abhängigen Patentansprüche können entweder einzeln oder in freier Kombination miteinander wirken.

Vorteilhaft wird als der spezielle Arbeitsspeicher ein Cache-Speicher oder ein Tightly-Coupled Memory verwendet. Solche Speicherstrukturen sind durch eine besonders schnelle Schnittstelle an einen Mikroprozessor bzw. Prozessor-Kern angebunden, so dass eine schnelle Abarbeitung des darin befindlichen Programm-Codes gewährleistet ist. Selbstverständlich können auch andere bei Zugriffen bevorzugte Speicherarten eingesetzt werden. Wesentlich ist dabei, dass nicht aufgrund einer Ausführungsstatistik oder ähnlicher Mechanismen darüber entschieden wird, welche Programmteile und Programm-Routinen in diesem speziellen Arbeitsspeicher gespeichert werden, sondern dass die von dem Benutzer priorisierten Programmteile und ggf. die davon abhängigen Programmteile und Betriebssystem-Routinen dauerhaft in diesem speziellen Arbeitsspeicher vorgehalten werden. Als zu priorisierende Aufgaben bieten sich beispielsweise Verarbeitungsroutinen für Ereignisse an, sog. Interrupt-Tasks (Interrupt-Service-Routinen), oder ähnlich wichtige bzw. zeitkritische Programmteile. Sofern von den identifizierten Programmteilen Daten oder Datenstrukturen zugegriffen oder benötigt werden, ist es sinnvoll, diese ebenfalls nach Möglichkeit im speziellen Arbeitsspeicher vorzuhalten, um diesen Zugriff mit konstanter und hoher Zugriffsgeschwindigkeit zu realisieren. Weiter können vorteilhaft auch die von den identifizierten Programmteilen aufgerufenen Betriebssystem-Routinen im speziellen Arbeitsspeicher vorgehalten werden, sofern dessen Speichervermögen dazu ausreicht. In einer vorteilhaften Ausgestaltung der Erfindung werden, beginnend mit den Aufgaben mit der höchsten Priorität, so viele Programmteile und zugehörige Daten in den speziellen Arbeitsspeicher verlagert, bis dessen Kapazitätsgrenzen erreicht werden.

Eine weitere, zusätzliche Möglichkeit zur Erreichung konstanter, hoher Verarbeitungsgeschwindigkeiten besteht darin, in Multiprozessor-Systemen oder in Systemen mit Mehrkern-Prozessoren zumindest einen Prozessor oder einen Prozessor-Kern für die identifizierten Programmteile zu reservieren.

Bei der Realisierung des Verfahrens wird vorteilhaft ein Programmiersystem verwendet, welches als sog. "Engineering-System" ausgestaltet ist, und somit zumindest einen Editor für die Erstellung des Automatisierungsprogramms und einen Compiler für die Compilierung des Automatisierungsprogramms umfasst. Dadurch können die Informationen, die über die Eingabemöglichkeit erfasst werden und die die Priorisierung von Programmteilen betreffen, direkt an den Compiler und ein entsprechendes Ladeprogramm weitergeleitet werden, wobei zusätzlich zu den zuvor benannten Maßnahmen, nämlich der Speicherung solcher Programmteile bzw. des daraus resultierenden ausführbaren Codes in dem speziellen Arbeitsspeicher, für diese Programmteile weitere vorteilhafte Maßnahmen ergriffen werden können. So ist es beispielsweise bei vielen Compilern möglich, entweder besonders schnelle Programmcode zu erzeugen oder aber bei der Übersetzung des Programms mehr Gewicht auf einen sehr "kompakten", speicher-ökonomischen Programmcode zu legen. Entsprechend kann je nach verfügbarem speziellen Arbeitsspeicher der Compiler die identifizierten Programmteile derart übersetzen, dass sie auf der einen Seite eine möglichst hohe Ausführungsgeschwindigkeit aufweisen, andererseits aber vollständig im speziellen Arbeitsspeicher untergebracht werden können. Ein solches Programmiersystem hat vorteilhaft eine Kenntnis über die ungefähre Größe des Verfügbaren speziellen Arbeitsspeichers, so dass schon bei der Eingabemöglichkeit ein Benutzer darauf hingewiesen werden kann, welche oder wie viele der verfügbaren Programmteile und Routinen priorisiert werden können, und welche nicht.

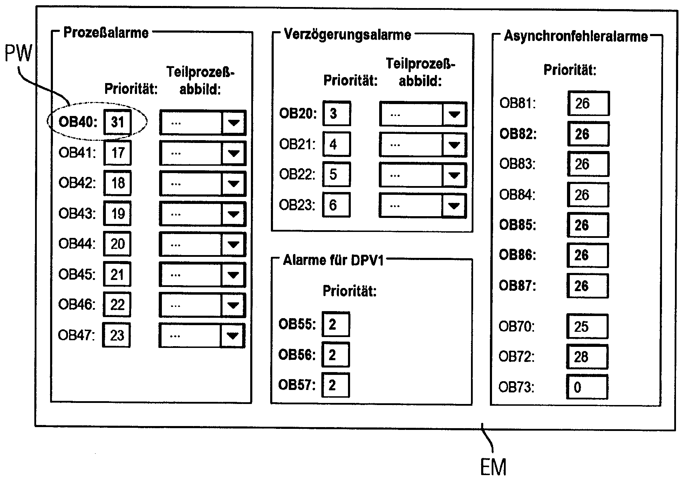

Ein Ausführungsbeispiel des erfindungsgemäßen Verfahrens wird nachfolgend anhand der Zeichnung erläutert. Das Ausführungsbeispiel dient gleichzeitig der Erläuterung eines erfindungsgemäßen Programmiersystems.

Dabei zeigt die einzige Figur eine Eingabemöglichkeit für Prioritätswerte, die Ereignissen und anderen Programmteilen zugeordnet werden können.

In der Figur ist eine Eingabemöglichkeit EM dargestellt, die verschiedene Programmteile oder Aufgaben eines Automatisierungsprogramms darstellt, beispielsweise Prozess-Alarme, Verzögerungs-Alarme, Asynchronfehler-Alarme und andere. Jede diese Kategorien listet verschiedene Programmmodule auf, die auch als "Organisationsbausteine" OB bezeichnet werden. Jedem dieser Organisationsbausteine OB kann ein Prioritätswert PW zugeordnet werden, wobei zumindest derjenige Organisationsbaustein OB, mit dem höchsten Prioritätswert (hier: 31), in der Figur ist das der Organisationsbaustein OB40, zur persistenten Speicherung im speziellen Arbeitsspeicher vorgesehen werden soll.

Die Eingabemöglichkeit EM ist somit eine Anwenderschnittstelle, die eine komfortable Möglichkeit zur Erstellung oder Bestimmung von SPS-Teilapplikationen mit hohen Anforderungen an Reproduzierbarkeit und Performance bietet, wobei die zugrunde liegende reale Hardware für einen Benutzer verdeckt ist. Dem System muss lediglich eine Angabe über die Größe des speziellen Arbeitsspeichers vorliegen.

Die Anwenderprogrammerstellung erfolgt bei speicherprogrammierbaren Steuerungen in Programmiersystemen, die zumeist auf Basis einer virtuellen Maschine realisiert sind. Dieses Programmiersystem umfasst die Strukturierung von Teilaufgaben in Form von sog. "Tasks", also Organisationsbausteinen OB. Den "Tasks" können durch den Anwender Prioritäten bzw. Prioritätswerte PW zugeordnet werden. In den Tasks, also den priorisierten Programmteilen, können weitere Code-Bausteine hierarchisch aufgerufen werden. Ein- und derselbe Code-Baustein kann hierbei auch in verschiedenen "Tasks" verwendet werden. Der in den Code-Bausteinen enthaltene Code kann auf globale oder lokale Daten zugreifen.

Eine vom Anwender erstellte Applikation wird mit Hilfe eines Compilier-Prozesses vollständig oder inkrementell in Zielplattform-spezifischen Maschinencode übersetzt. Dieser Compilier-Prozess kann in mehrere Stufen erfolgen. Die jeweiligen Stufen des Compilier-Prozesses können sowohl auf dem Erstellsystem, als auch anteilig oder ganz auf der Zielplattform (SPS, CPU) ausgeführt werden.

Durch die Eingabemöglichkeit EM erhält ein Anwender also an der Programmieroberfläche die Möglichkeit, beispielsweise "Jitter-kritsche Tasks" entsprechend zu kennzeichnen, wobei dies über eine einstellbare Task-Priorität (Prioritätswert PW) oder mit Hilfe eines zusätzlichen Attributs (nicht dargestellt) erfolgen kann. Spätestens während des Compiler-Laufs erfolgt eine Analyse der Programmhierarchie. Auf dieser Basis werden die Code- und Datenanteile gekennzeichnet, die Bestandteil dieser kritischen "Tasks" sind und somit für eine Speicherung im speziellen Arbeitspeicher vorgesehen werden müssen.

Die Angabe der Größe des zur Verfügung stehenden speziellen Arbeitsspeichers erfolgt vorteilhaft auf Basis einer virtuellen Speichergröße, die unabhängig von der tatsächlich zugrunde liegenden Hardware ist. Diese virtuelle Speicherangabe berücksichtigt ggf. Compiler-Faktoren bei der Umsetzung des Anwendercodes auf die Zielplattform sowie ggf. ausreichend Reserven für die perfomante Abarbeitung der zu priorisierenden Durchsatz-orientierten Programmteile bzw. der mit zu speichernden Betriebssystemfunktionalität. Mit Hilfe dieser standardisierten Speichergrößenangabe für den schnellen, speziellen Arbeitsspeicher kann dem Anwender eine Zielhardwareunabhängige Auslastungsanzeige zur Verfügung gestellt werden. Dem Anwender wird also eine bestimmte Größe an schnellem Speicher für "Jitter-kritsche" Programmteile garantiert. Interne Abbildungsverfahren bzw. der reale Aufbau der Hardware sind für den Anwender vollständig transparent.

Auf Basis der Kennzeichnung von "Jitter-kritischen" Programmteilen kann mit Hilfe des Compilers bzw. Lokators (Loader) automatisch eine feste Zuordnung der kritischen Programmbestandteile zu dem oder den speziellen Arbeitsspeicher-Bereich(en) in der Zielplattform erfolgen. Dieser reproduzierbar schnelle Arbeitsspeicher kann durch "Locken" bestimmter Bereiche im Cache, durch andere Zuordnungsverfahren (z.B. Cache-Coloring) oder durch Locatierung in einen anderen schnellen Speicherbereich (z.B. TCMn - Tightly-Coupled Memory) erfolgen. Bei der Zuordnung können vorteilhaft auch die aus dem Anwenderprogramm heraus verwendeten Systemfunktionen (z.B. Teile des SBS-Betriebssystems oder der "Firmware") berücksichtigt werden, wodurch nur solche der Systemfunktionen permanent schnell Arbeitsspeicher belegen, die tatsächlich auch in den kritischen "Tasks" verwendet werden.

Zusätzlich kann vorteilhaft die Kennzeichnung mittels der Eingabemöglichkeit EM dazu verwendet werden, für die kritischen Programmbestandteile gezielt bestimmte Strategien für den Compiler zu bestimmen, beispielsweise Optimierung auf Code-Größe oder Code-Geschwindigkeit.

In einer anderen, vorteilhaften Ausgestaltung besteht die Möglichkeit, kritische Programmbestandteile gezielt in eine eigenständige Ausführungseinheit auszulagern, beispielsweise in konfigurierbare Logik oder zur Abarbeitung eines reservierten Prozessors oder Prozessor-Kerns. Zusätzlich oder alternativ kann bei der Locatierung auch ein Verfahren zur Vergabe von Speicheradressen gewählt werden, welches eine gleichmäßige Auslastung von zur Verfügung stehenden "Cache-Ways" ermöglicht, wodurch ausreichend Cache-Ressourcen für die performante Abarbeitung der Durchsatz-orientierten Teilaufgaben zur Verfügung stehen.

Das Verfahren kann sowohl für textuelle als auch für graphische Programmiersprachen sowie einer Kombination daraus angewendet werden. Dem Anwender soll dabei optional die Möglichkeit gegeben werden, bestimmte Programmteile, die in der Aufrufhierarchie eines ausgewählten, kritischen Programmteils vorhanden sind, von der Locatierung in den schnellen, speziellen Arbeitsspeicher auszuschließen, beispielsweise für unkritischen Initialisierungscode oder für unkritische Fehlerbehandlungssequenzen. Dies kann durch Kennzeichnung ganzer Bausteine, beispielsweise Organisationsbausteine OB, oder durch Kennzeichnung im Quellcode erfolgen. Im Gegensatz dazu kann dem Anwender ebenfalls optional die Möglichkeit gegeben werden, bestimmte Programmteile, auch wenn sie sich nicht in der Aufrufhierarchie eines kritischen "Tasks" befinden, im schnellen, speziellen Arbeitsspeicher abzulegen. Dies kann beispielsweise durch Kennzeichnung ganzer Organisationsbausteine OB oder durch Kennzeichnung im Quellcode erfolgen. Als eine weitere Option kann das Verfahren auch so ausgebildet sein, dass auch durch ein Nachladen im Betriebszustand "Run" keine negativen Auswirkungen auf die zeitliche Stabilität auftreten, sofern in der virtuellen Speicherangabe bereits die dazu erforderlichen Ressourcen berücksichtigt sind.

In einer vorteilhaften Ausgestaltung kann nicht nur Programm-code, sondern es können auch Datenbereiche bei der Analyse und Locatierung berücksichtigt werden. In einer weiteren vorteilhaften Ausgestaltung können auch mehrere verschiedene spezielle Arbeitsspeicher-Bereiche mit verschiedenen zugeordneten Geschwindigkeitsklassen angegeben und berücksichtigt werden.

## Patentansprüche

1. Verfahren zur Programmierung einer Automatisierungskomponente einer industriellen Automatisierungsanordnung,
wobei die Automatisierungskomponente mit einem allgemeinen Arbeitspeicher und mit zumindest einem speziellen Arbeitsspeicher mit schnellerem Zugriff ausgestattet ist, und
wobei zur Laufzeit eines Automatisierungsprogramms ein Teil des Automatisierungsprogramms in dem speziellen Arbeitsspeicher gespeichert wird,
**dadurch gekennzeichnet,**
**dass** bei der Erstellung des Automatisierungsprogramms einem Benutzer eine Eingabemöglichkeit (EM) zur Zuordnung von Prioritätswerten (PW) zu einzelnen Aufgaben des Automatisierungsprogramms zur Verfügung gestellt wird,
**dass** durch eine Einrichtung eine Identifizierung aller Programmteile, die bei der Abarbeitung zumindest der Aufgabe mit der höchsten von dem Benutzer zugeordneten Priorität aufgerufen werden oder aufgerufen werden können, erfolgt, und
**dass** die identifizierten Programmteile während der Ausführung des Automatisierungsprogramms zur dauerhaften Speicherung in dem zumindest einen speziellen Arbeitsspeicher vorgesehen werden.

2. Verfahren nach Patentanspruch 1,
**dadurch gekennzeichnet,**
**dass** als der spezielle Arbeitsspeicher ein Cache-Speicher oder ein Tightly-Coupled Memory verwendet wird.

3. Verfahren nach einem der vorhergehenden Patentansprüche,
**dadurch gekennzeichnet,**
**dass** als zu priorisierende Aufgabe zumindest eine Verarbeitungsroutine für ein Ereignis auswählbar ist.

4. Verfahren nach einem der vorhergehenden Patentansprüche,
**dadurch gekennzeichnet,**
**dass** zur Laufzeit des Automatisierungsprogramms in dem speziellen Arbeitsspeicher auch einige oder alle der von den identifizierten Programmteilen zugegriffenen Daten gehalten werden.

5. Verfahren nach einem der vorhergehenden Patentansprüche,
**dadurch gekennzeichnet,**
**dass** in dem speziellen Arbeitsspeicher auch einige oder alle der von den identifizierten Programmteilen aufgerufenen Betriebssystem-Routinen gehalten werden.

6. Verfahren nach einem der vorhergehenden Patentansprüche,
**dadurch gekennzeichnet,**
**dass** das Automatisierungsprogramm zum Ablauf auf einer Hardware-Plattform mit mehreren Prozessoren oder mit zumindest einem Multikern-Prozessor vorgesehen ist, wobei die identifizierten Programmteile zur Ausführung auf einem dafür reservierten der Prozessoren oder Prozessorkerne vorgesehen werden.

7. Verfahren nach einem der vorhergehenden Patentansprüche,
**dadurch gekennzeichnet,**
**dass** zur Programmierung ein Engineering-System verwendet wird, welches zumindest einen Editor für die Erstellung des Automatisierungsprogramms und einen Compiler für die Compilierung des Automatisierungsprogramms umfasst.

8. Verfahren nach Patentanspruch 7,
**dadurch gekennzeichnet,**
**dass** durch den Compiler derjenige ausführbare Programm-Code, der aus den identifizierten Programmteilen resultiert, derart gekennzeichnet wird, dass ein Ladeprogramm auf einer Hardware-Plattform diesen ausführbaren Programm-Code in den speziellen Arbeitsspeicher lädt.

9. Programmiersystem für die Erstellung eines Automatisierungsprogramms für eine industrielle Automatisierungskomponente,
**dadurch gekennzeichnet,**
**dass** das Programmiersystem eine Eingabemöglichkeit (EM) zur Zuordnung von Prioritätswerten (PW) zu einzelnen Aufgaben des Automatisierungssystems aufweist,
**dass** das Programmiersystem zur Identifizierung aller Programmteile, die bei der Abarbeitung zumindest derjenigen Aufgabe mit des höchsten, mittels der Eingabemöglichkeit (EM) zugeordneten Prioritätswertes (PW) aufgerufen werden oder aufgerufen werden können, eingerichtet ist, und
**dass** das Programmiersystem dazu eingerichtet ist, die identifizierten Programmteile für die dauerhafte Speicherung in dem zumindest einen speziellen Arbeitsspeicher für die Dauer der Ausführung des Automatisierungsprogramms vorzusehen.

10. Programmiersystem nach Patentanspruch 9,
**dadurch gekennzeichnet,**
**dass** Programmiersystem zur Adressierung von Cache-Speicher oder von Tightly-Coupled Memory als speziellem Arbeitsspeicher eingerichtet ist.

11. Programmiersystem nach einem der Patentansprüche 9 oder 10,
**dadurch gekennzeichnet,**
**dass** die Eingabemöglichkeit (EM) zur Auswahl einer Ereignis-Verarbeitungsroutine als zu priorisierende Aufgabe eingerichtet ist.

12. Programmiersystem nach einem der Patentansprüche 9 bis 11,
**dadurch gekennzeichnet,**
**dass** das Programmiersystem derart eingerichtet ist, dass zur Laufzeit des Automatisierungsprogramms in dem speziellen Arbeitsspeicher auch einige oder alle der von den identifizierten Programmteilen zugegriffenen Daten gehalten werden.

13. Programmiersystem nach einem der Patentansprüche 9 bis 12,
**dadurch gekennzeichnet,**
**dass** das Programmiersystem derart eingerichtet ist, dass zumindest einige der von den identifizierten Programmteilen aufgerufenen Betriebssystem-Routinen identifiziert und für die Dauer der Programmausführung in dem speziellen Arbeitsspeicher vorgehalten werden.

14. Programmiersystem nach einem der Patentansprüche 9 bis 13,
**dadurch gekennzeichnet,**
**dass** das Programmiersystem zur Erstellung von ausführbarem Programmcode für eine Ziel-Hardware mit mehreren Prozessoren oder mit zumindest einem Multikern-Prozessor vorgesehen ist, wobei das Programmiersystem dazu eingerichtet ist, die identifizierten Programmteile zur Ausführung auf einem für diese reservierten der Prozessoren oder Prozessorkerne vorzusehen.

15. Programmiersystem nach einem der Patentansprüche 9 bis 14,
**dadurch gekennzeichnet,**
**dass** das Programmiersystem zumindest einen Editor für die Erstellung des Automatisierungsprogramms und einen Compiler für die Compilierung des Automatisierungsprogramms umfasst.

16. Programmiersystem nach einem der Patentansprüche 9 bis 15,
**dadurch gekennzeichnet,**
**dass** das Programmiersystem zur Erstellung von Anweisungen für ein Ladeprogramm auf einer Ziel-Hardware eingerichtet ist, wobei die Anweisung das Laden von identifizierten Programmteilen in den speziellen Arbeitsspeicher umfassen.

## Claims

1. Method for programming an automation component of an industrial automation arrangement,
the automation component being provided with a general main memory and with at least one special main memory with faster access, and part of an automation program being stored in the special main memory at the run time of the automation program, **characterized**
**in that** a user is provided with an input option (EM) for assigning priority values (PW) to individual tasks of the automation program when creating the automation program,
**in that** a device identifies all program parts which are called or can be called when executing at least the task with the highest priority assigned by the user, and
**in that** the identified program parts are intended to be permanently stored in the at least one special main memory during execution of the automation program.

2. Method according to Patent Claim 1,
**characterized**
**in that** a cache memory or a tightly coupled memory is used as the special main memory.

3. Method according to one of the preceding patent claims,
**characterized**
**in that** at least one processing routine for an event can be selected as the task to be prioritized.

4. Method according to one of the preceding patent claims,
**characterized**
**in that** some or all of the data accessed by the identified program parts are also held in the special main memory at the run time of the automation program.

5. Method according to one of the preceding patent claims,
**characterized**
**in that** some or all of the operating system routines called by the identified program parts are also held in the special main memory.

6. Method according to one of the preceding patent claims,
**characterized**
**in that** the automation program is intended to run on a hardware platform having a plurality of processors or having at least one multicore processor, the identified program parts being intended to be executed on one of the processors or processor cores reserved for this purpose.

7. Method according to one of the preceding patent claims,
**characterized**
**in that** an engineering system is used for the purpose of programming and comprises at least one editor for creating the automation program and a compiler for compiling the automation program.

8. Method according to Patent Claim 7,
**characterized**
**in that** the compiler characterizes that executable program code which results from the identified program parts in such a manner that a loading program on a hardware platform loads this executable program code into the special main memory.

9. Programming system for creating an automation program for an industrial automation component,
**characterized**
**in that** the programming system has an input option (EM) for assigning priority values (PW) to individual tasks of the automation system,
**in that** the programming system is set up to identify all program parts which are called or can be called when executing at least that task with the highest priority value (PW) assigned using the input option (EM), and
**in that** the programming system is set up such that the identified program parts are intended to be permanently stored in the at least one special main memory for the duration of the execution of the automation program.

10. Programming system according to Patent Claim 9,
**characterized**
**in that** the programming system is set up to address a cache memory or a tightly coupled memory as the special main memory.

11. Programming system according to either of Patent Claims 9 and 10,
**characterized**
**in that** the input option (EM) is set up to select an event processing routine as the task to be prioritized.

12. Programming system according to one of Patent Claims 9 to 11,
**characterized**
**in that** the programming system is set up in such a manner that some or all of the data accessed by the identified program parts are also held in the special main memory at the run time of the automation program.

13. Programming system according to one of Patent Claims 9 to 12,
**characterized**
**in that** the programming system is set up in such a manner that at least some of the operating system routines called by the identified program parts are identified and are held in the special main memory for the duration of program execution.

14. Programming system according to one of Patent Claims 9 to 13,
**characterized**
**in that** the programming system is intended to create executable program code for target hardware having a plurality of processors or having at least one multicore processor, the programming system being set up such that the identified program parts are intended to be executed on one of the processors or processor cores reserved for said program parts.

15. Programming system according to one of Patent Claims 9 to 14,
**characterized**
**in that** the programming system comprises at least one editor for creating the automation program and a compiler for compiling the automation program.

16. Programming system according to one of Patent Claims 9 to 15,
**characterized**
**in that** the programming system is set up to create instructions for a loading program on target hardware, the instructions comprising the loading of identified program parts into the special main memory.

## Revendications

1. Procédé de programmation d'un composant d'automatisation d'un agencement d'automatisation industriel,
dans lequel le composant d'automatisation est équipé d'une mémoire de travail générale et d'au moins une mémoire de travail spéciale à accès plus rapide et dans lequel, pour le temps de passage d'un programme d'automatisation, on mémorise une partie du programme d'automatisation dans la mémoire de travail spéciale,
**caractérisé**
**en ce que**, lors de l'élaboration du programme d'automatisation, on met à disposition d'un utilisateur une possibilité ( EM ) d'entrée pour l'affectation de valeurs ( PW ) de priorité à des tâches individuelles du programme d'automatisation,
**en ce que**, par un dispositif, il s'effectue une identification de toutes les parties du programme, qui, lors du déroulement au moins de la tâche, sont appelées ou peuvent l'être avec la priorité la plus grande affectée par l'utilisateur et
**en ce que** les parties de programme identifiées sont prévues pendant l'exécution du programme d'automatisation pour la mémorisation permanente dans la au moins une mémoire de travail spéciale.

2. Procédé suivant la revendication 1,
**caractérisé**
**en ce que** l'on utilise comme mémoire de travail spéciale une mémoire cache ou une tightly-coupled memory.

3. Procédé suivant l'une des revendications précédentes,
**caractérisé**
**en ce que**, comme tâche à rendre prioritaire, on peut choisir au moins une routine de traitement pour un évènement.

4. Procédé suivant l'une des revendications précédentes,
**caractérisé**
**en ce que**, pour le temps de passage du programme d'automatisation dans la mémoire de travail spéciale, on maintient aussi certaines des données ou toutes les données auxquelles ont accédé les parties de programme identifiées.

5. Procédé suivant l'une des revendications précédentes,
**caractérisé**
**en ce que** l'on maintient dans la mémoire de travail spéciale également certaines des routines de système de fonctionnement, ou toutes les routines de système de fonctionnement, appelées par les parties de programme identifiées.

6. Procédé suivant l'une des revendications précédentes,
**caractérisé**
**en ce que** le programme d'automatisation est prévu pour le déroulement sur une plateforme matérielle ayant plusieurs processeurs ou ayant au moins un processeur multinoyaux, des parties de programme identifiées étant prévues pour la réalisation sur l'un réservé à cet effet des processeurs ou des noyaux de processeur.

7. Procédé suivant l'une des revendications précédentes,
**caractérisé**
**en ce que** l'on utilise pour la programmation un système d'ingénierie qui comprend au moins un éditeur pour l'élaboration du programme d'automatisation et un compileur pour la compilation du programme d'automatisation.

8. Procédé suivant la revendication 7,
**caractérisé**
**en ce qu'**on **caractérise par** le compileur le code de programme réalisable qui résulte des parties de programme identifiées, de manière à ce qu'un programme de chargement sur une plateforme matérielle charge ce code de programme réalisable dans la mémoire de travail spéciale.

9. Système de programmation pour l'élaboration d'un programme d'automatisation pour un composant d'automatisation industriel,
**caractérisé**
**en ce que** le système de programmation a une possibilité ( EM ) d'entrée pour affecter des valeurs ( PW ) de priorité à des tâches individuelles du système d'automatisation,
**en ce que** le système de programmation est conçu pour l'identification de toutes les parties du programme qui, lors du déroulement d'au moins la tâche ayant la valeur ( PW ) de priorité la plus grande affectée au moyen de la possibilité ( EM ) d'entrée, sont appelées ou peuvent l'être et
**en ce que** le système de programmation est conçu pour prévoir les parties de programme identifiées pour la mémorisation permanente dans la au moins une mémoire de travail spéciale pendant la durée de la réalisation du programme d'automatisation.

10. Système de programmation suivant la revendication 9,
**caractérisé**
**en ce que** le système de programmation est conçu pour l'adressage de mémoire cache ou de tightly-coupled memory comme mémoire de travail spéciale.

11. Système de programmation suivant l'une des revendications 9 ou 10,
**caractérisé**
**en ce que** la possibilité ( EM ) d'entrée est conçue pour le choix d'une routine de traitement d'évènement comme tâche à rendre prioritaire.

12. Système de programmation suivant l'une des revendications 9 à 11,
**caractérisé**
**en ce que** le système de programmation est conçu pour maintenir, pour le temps de passage du programme d'automatisation dans la mémoire de travail spéciale, également certaines données ou toutes les données auxquelles ont accédé les parties de programme identifiées.

13. Système de programmation suivant l'une des revendications 9 à 12,
**caractérisé**
**en ce que** le système de programmation est conçu de manière à ce qu'au moins certaines des routines de système de fonctionnement, appelées par les parties de programme identifiées, soient identifiées et soient mises en réserve dans la mémoire de travail spéciale pendant la durée de la réalisation du programme.

14. Système de programmation suivant l'une des revendications 9 à 13,
**caractérisé**
**en ce que** le système de programmation est prévu pour l'élaboration de codes de programme réalisables pour un matériel cible ayant plusieurs processeurs ou ayant au moins un processeur multinoyaux, le système de programmation étant conçu pour prévoir les parties de programme identifiées pour la réalisation sur l'un qui leur est réservé des processeurs ou des noyaux de processeur.

15. Système de programmation suivant l'une des revendications 9 à 14,
**caractérisé**
**en ce que** le système de programmation comprend au moins un éditeur pour l'élaboration des programmes d'automatisation et un compileur pour la compilation du programme d'automatisation.

16. Système de programmation suivant l'une des revendications 9 à 15,
**caractérisé**
**en ce que** le système de programmation est conçu pour l'élaboration d'instructions ou pour un programme de chargement sur un matériel cible, l'instruction comprenant le chargement de parties de programme identifiées dans la mémoire de travail spéciale.
